# EUROPEAN PATENT SPECIFICATION

(11) **EP 3 391 190 B1**
(45) Date of publication and mention of the grant of the patent: **29.01.2020**
(21) Application number: 16813121.7
(22) Date of filing: 06.12.2016
(51) Int. Cl.: G06F 3/14, G09G 5/14

(54) **PIPELINING PRE-COMPOSITION DATA**
PIPELINE-VORKOMPOSITIONSDATEN
PIPELINE DE DONNÉES DE PRÉCOMPOSITION

(30) Priority: 17.12.2015 GB 201522301
(43) Date of publication of application: 24.10.2018
(73) Proprietor: Displaylink (UK) Limited, Cambridge CB4 0GF (GB)
(72) Inventor: ELLIS, Daniel, Cambridge CB4 3HQ (GB); TURNOCK, Martin Andrew, Brixton London SW9 8EP (GB)
(74) Representative: Hirsz, Christopher Stanislaw
(86) International application number: PCT/GB2016/053841
(87) International publication number: WO 2017/103571

(56) References cited:
- US-A1- 2010 325 576
- US-A1- 2011 225 542
- US-A1- 2012 050 313

## Description

### Background

As remote desktop technology becomes more efficient and effective, it is becoming increasingly common to connect multiple display devices to a single computing device, commonly known as a host. This may be done by means of a docking station or similar device (a "display control device"), which allows the host to have a limited number of connection points for display devices without necessarily limiting the number of display devices that can be connected in practice. In such cases, the connection to the display control device may well have a limited bandwidth, which may vary according to how much data is being sent to different display devices across the same connection (at least in part). Furthermore, even if only one display device is connected, the connection between the host device and the display control device may well be limited for other reasons.

Conventionally, composition of frames of display data is performed on the host and complete frames are then transmitted to the display control device. There are also some systems that allow composition to take place on the display control device, but in this case all data is sent at all times to the display control device regardless of circumstances. In both types of system, there is no way to tailor composition or the behaviour of either device to circumstances. This is inefficient.

The invention seeks to solve or at least mitigate this problem.

US2010/325576 discloses a method of displaying overlapping windows from a client device.

### Brief Summary of the Invention

Accordingly, in a first aspect, the invention provides a method of transmitting display data from a host device to a display control device over a limited bandwidth connection, wherein the display data to be displayed by the display control device on a display device forms an image comprising two or more overlapping image elements, the method comprising:
compositing, by the host device, a first image formed of at least the two overlapping image elements;
transmitting, by the host device, the first image over the limited bandwidth connection to the display control device for display on a display device;
determining, by the host device, hidden display data of one or more portions of one or more overlapped image elements whose display data was not in the composited first image;
determining, by the host device, when the limited bandwidth connection has sufficient available bandwidth capacity for at least some of the hidden display data to be transmitted to the display control device;
in response to determining that the limited bandwidth connection has sufficient available bandwidth capacity for at least some of the hidden display data to be transmitted to the display control device, transmitting, by the host device, at least some of the hidden display data to the display control device;
determining, by the host device, when a second image to be displayed includes at least some of the hidden display data; and
transmitting information, by the host device, to the display control device instructing the display control device to use the transmitted hidden display data to composite the second image using the transmitted hidden display data.

In an embodiment, the two or more overlapping image elements are generated by two or more different applications.

In a preferred embodiment, the method further comprises:
determining, by the host device whether all the hidden display data required for the second or a further image is available to the display control device; and
if it is determined that not all the required hidden display data is available, determining, by the host device, whether to send the required hidden display data to the display control device and instruct the display control device to composite the second or the further image, or whether to composite a new first image at the host device and to transmit at least a changed part of the new first image to the display control device.

Preferably, determining, by the host device, whether to send the required hidden display data to the display control device and instruct the display control device to composite the second or the further image, or whether to composite a new first image at the host device and to transmit at least a changed part of the new first image to the display control device, comprises:
determining, by the host device, whether the limited bandwidth connection has sufficient available bandwidth capacity for the required hidden display data to be transmitted to the display control device; and
in response to determining that the limited bandwidth connection has sufficient available bandwidth capacity for the required hidden display data to be transmitted to the display control device, transmitting, by the host device, the required hidden display data to the display control device.

Alternatively, determining, by the host device, whether to send the required hidden display data to the display control device and instruct the display control device to composite the second or the further image, or whether to composite a new first image at the host device and to transmit at least a changed part of the new first image to the display control device, comprises:
determining, by the host device, whether the display control device compositing the second or the further image would be more or less efficient than the host device compositing a new first image and transmitting at least a changed part of the new first image to the display control device; and
in response to determining that the display control device compositing the second or the further image would be more efficient than the host device compositing a new first image and transmitting at least a changed part of the new first image to the display control device, transmitting, by the host device, the required hidden display data to the display control device.

Preferably, the method further comprises:
in response to determining that the display control device compositing the second or the further image would be less efficient than the host device compositing a new first image and transmitting at least a changed part of the new first image to the display control device, compositing, by the host device, a new first image;
transmitting, by the host device, at least a changed part of the new first image over the limited bandwidth connection to the display control device; and
repeating the remaining steps of any one of the preceding claims for the new first image and a new second image.

In an example, the at least a changed part of the new first image comprises one or more updated tiles forming part of the new first image.

The method may further comprise:
storing, by the display control device, the transmitted hidden display data in storage available to the display control device; and
compositing, by the display control device, the second image using the stored hidden display data based on the information transmitted by the host device.

Optionally, the method may further comprise:
determining, by the display control device, display data from the first image that was displaced by the stored hidden display data during the compositing by the display control device; and
storing, by the display control device, the displaced display data as hidden display data.

The method preferably further comprises:
compositing, by the display control device a further image using the stored hidden display data.

In an embodiment, the method may further comprise:
determining, by the display control device whether all the hidden display data required for the second or the further image is available to the display control device; and
if it is determined that not all the required hidden display data is available, transmitting, by the display control device, a request to the host device for the required hidden display data that is not available.

Preferably, the method further comprises:
receiving, by the host device, the request for the required hidden display data that is not available to the display control device;
determining, by the host device, whether to send the requested required hidden display data to the display control device and instruct the display control device to composite the second or the further image, or whether to composite a new first image at the host device and to transmit at least a changed part of the new first image to the display control device.

In an example, determining, by the host device, whether to send the required hidden display data to the display control device and instruct the display control device to composite the second or the further image, or whether to composite a new first image at the host device and to transmit at least a changed part of the new first image to the display control device, comprises:
determining, by the host device, whether the limited bandwidth connection has sufficient available bandwidth capacity for the required hidden display data to be transmitted to the display control device; and
in response to determining that the limited bandwidth connection has sufficient available bandwidth capacity for the required hidden display data to be transmitted to the display control device, transmitting, by the host device, the required hidden display data to the display control device.

Alternatively, determining, by the host device, whether to send the required hidden display data to the display control device and instruct the display control device to composite the second or the further image, or whether to composite a new first image at the host device and to transmit at least a changed part of the new first image to the display control device, may comprise:
determining, by the host device, whether the display control device compositing the second or the further image would be more or less efficient than the host device compositing a new first image and transmitting at least a changed part of the new first image to the display control device; and
in response to determining that the display control device compositing the second or the further image would be more efficient than the host device compositing a new first image and transmitting at least a changed part of the new first image to the display control device, transmitting, by the host device, the required hidden display data to the display control device.

In an embodiment, the method further comprises:
in response to determining that the display control device compositing the second or the further image would be less efficient than the host device compositing a new first image and transmitting at least a changed part of the new first image to the display control device, compositing, by the host device, a new first image;
transmitting, by the host device, at least a changed part of the new first image over the limited bandwidth connection to the display control device; and
repeating the remaining steps of any one of the preceding claims for the new first image and a new second image.

The method may further comprise monitoring available bandwidth capacity of the limited bandwidth connection. The monitoring is preferably performed by the host device or the display control device or by another device connected to the limited bandwidth connection.

According to a second aspect, the invention provides a host device for transmitting display data to a display control device over a limited bandwidth connection, the host device configured to perform a method as described above.

According to a third aspect, the invention provides a display control device for receiving display data from a host device over a limited bandwidth connection, the display control device configured to perform a method as described above.

In a fourth aspect, the invention provides a system comprising a host device, a display control device connected to the host device by a limited bandwidth connection and a display device connected to the display control device for displaying the image. The system is preferably configured to perform a method as described above.

Therefore, in some embodiments, the method comprises:
1. The host generating display data from a number of applications;
2. The host initially compositing a frame and transmitting the fully-composited frame to the display control device;
3. The host monitoring available bandwidth in the connection between the host and the display control device;
4. When sufficient spare bandwidth is available, the host sending remaining sections of generated display data ('Hidden Data');
5. When the data required for display changes:
   a. The host transmitting instructions as to how the image displayed has changed
   b. The display control device filling in gaps using the Hidden Data
6. The host continuing to monitor available bandwidth and updating both visible display data and Hidden Data when necessary and possible.

This is especially beneficial in a desktop environment as it is likely that there will be some delay between changes, so there will be downtime in data transmission. This downtime can then be used to send uncomposited data in order to speed up the application of changes in visible data as the data is already present at the display end.

When the data required for display changes, any part of an image which is no longer visible may optionally be treated as Hidden Data so that it is still available if the change is reversed.

Additionally, if data is required that has not been sent as Hidden Data, the display control device may request it from the host. The host may continue to monitor the available bandwidth and so may be aware of what is available at that moment. This then serves as an indication of whether it is appropriate to send the requested data and allow the display control device to composite the frame remotely, or to use the more powerful processor that is likely to be present on the host to composite a new frame for transmission, thus returning to the beginning of the process.

Alternatively, the host may maintain a record of what data has been sent both as frames and Hidden Data and, upon a change to the displayed image, it may check these records before sending change instructions. It may then determine from this the volume of additional data that would be requested by the display control device and thus may determine whether it would be most efficient to transmit a pre-composited frame, returning to the beginning of the process. This determination could be made depending on available bandwidth and connection speed. In this case, if the display control device has removed data from its memory, for example data that has not been used for some time in a case where the memory is full, it may send a notification of this removal to the host so that the host would be aware that it may need to re-send data that it has previously sent.

This method is different to both types of conventional composition methods because it reacts to changes in quality of service to send data over a network without delaying necessary updates.

### Brief Description of the Diagrams

Embodiments of the invention will now be more fully described, by way of example, with reference to the drawings, of which:
Figure 1(a) shows an example system, comprising a host device, display control device, and display device;
Figure 1(b) shows an example of a frame produced by the host device in the system of Figure 1(a);
Figure 2 shows two stages of data being sent from the host device to the display control device in the system of Figure 1(a);
Figure 3 shows a detail of the display control device in the system of Figure 1(a);
Figures 4(a) and 4(b) show a flow chart illustrating the process followed by the host device and display control device; and
Figure 5 shows two consecutive frames in the process of Figure 4.

### Detailed Description of the Diagrams

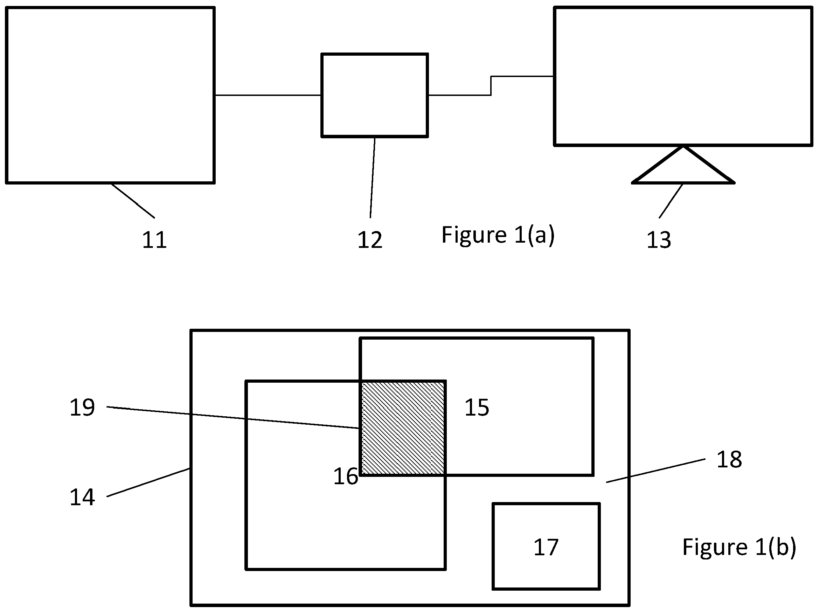

Figure 1a shows a basic overview of the system. It comprises a host [11], which may be a static computer such as a desktop PC or a mobile device such as a laptop, tablet computer, smartphone or even a wearable device such as a smart watch; a display control device [12], which may be a desktop docking station or adapter; and a display device [13] such as a monitor. The three devices [11, 12, 13] are connected to one another, in this example through wired connections. However, in other embodiments one or both of the connections may be wireless or may be connected over a network, including the Internet.

Figure 1b shows an image [14] for display on the display device. In this example, the image [14] consists of three application windows [15, 16, 17] against a plain background [18]. The application windows [15, 16, 17] and background [18] are all image elements and when generated by the host will each have their own associated display data. The application window labelled 16 is positioned 'behind' the application window labelled 15, with the result that the area of application window 16 marked with hatching [19] is hidden and will not be shown in the finished frame. Naturally, part of the background [18] will also be obscured by the application windows [15, 16, 17], but only the interaction between the application windows [15, 16, 17] will be discussed in detail herein as although the background is likely to be revealed and obscured to different degrees, it is likely to remain stable in appearance.

Conventionally, the image [14] will be composited either entirely on the host [11] or entirely on the display control device [12]. In the former case, the finished frame is composited in the host and only the finished frame is transmitted to the display control device so that the hatched area [19] will be discarded by the host as it is not present in the finished frame. In the latter case, all the data for the three application windows [15, 16, 17] and the background [18] will be transmitted to the display control device [12] even though the hatched area [19] is not immediately required. In this case the volume of data to be discarded is relatively low, but in another example the whole of application window 17 (for example) might be obscured in which case transmitting it at all would be a waste of time and resources, which may lead to unnecessary delay.

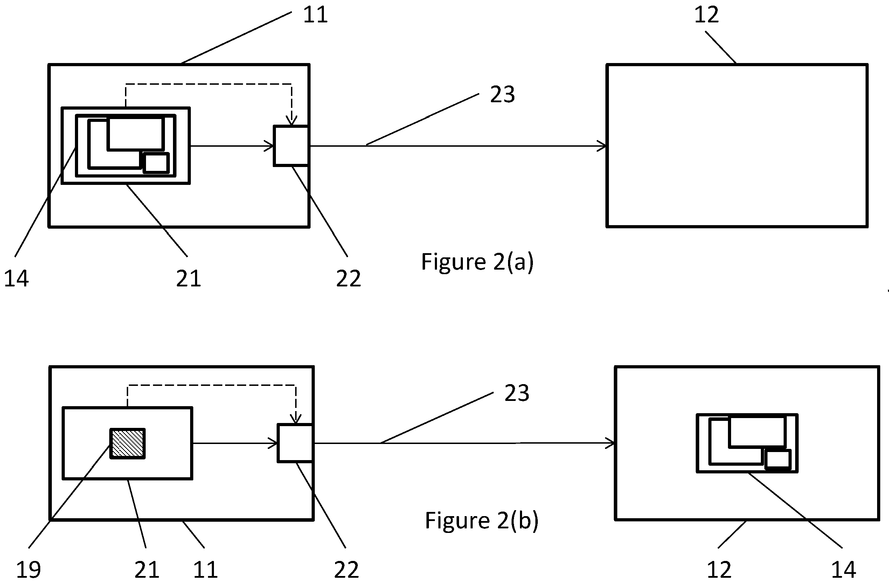

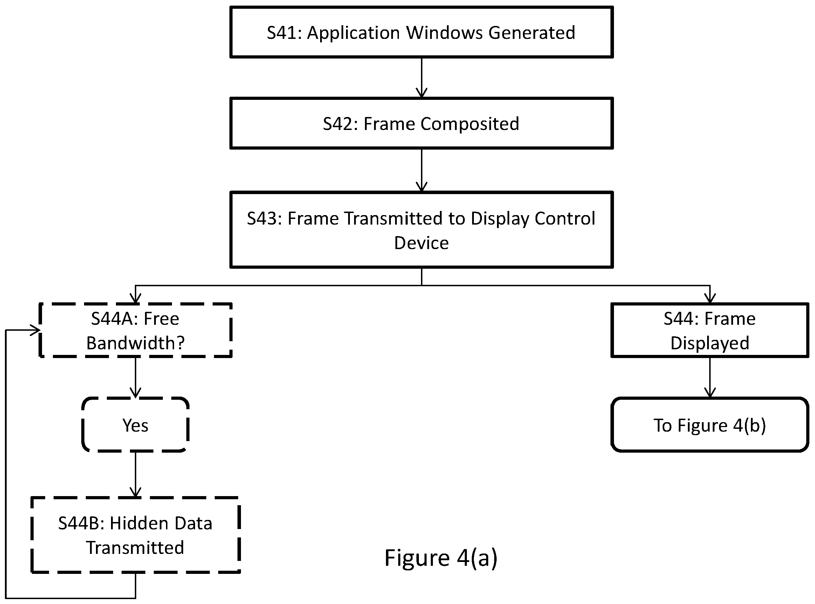

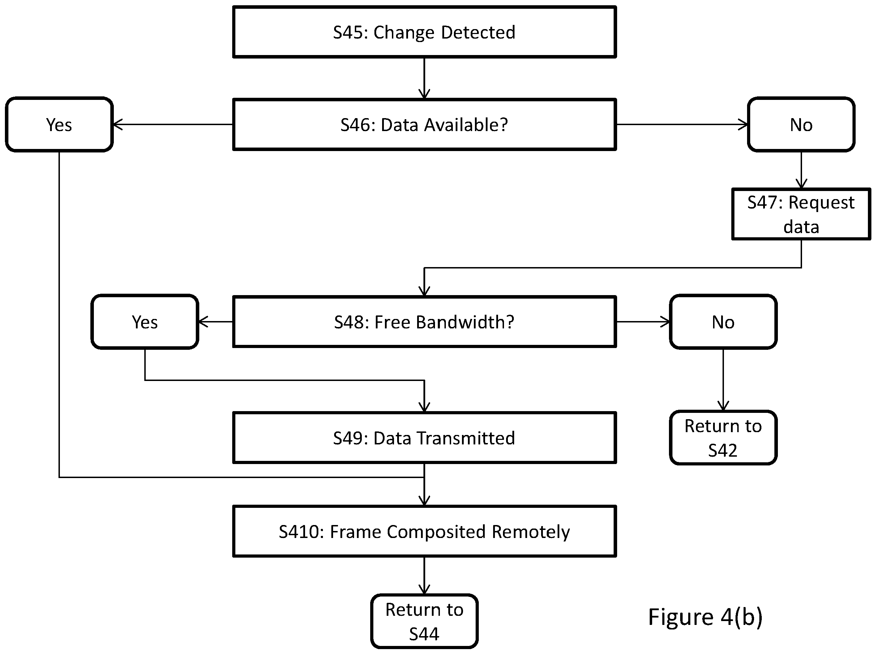

Figure 2 shows the data being transmitted at two stages of the process as described hereinafter with reference to Figure 4. In both parts of Figure 2, the host [11] is shown connected to the display control device [12] as previously described via a connection [23], which may have a limited capacity, for example, limited bandwidth. The host [11] includes a graphical generator [21], which produces display data and, in this embodiment, also composites frames. When compositing, it uses a dedicated area of memory to store unused data [19] which can then be transmitted, when there is capacity on the connection [23], to the display control device. This unused data may be termed Hidden Data.

The host [11] also includes an output engine [22], which handles the connection to the display control device [12]. It has data and signalling connections to the graphical generator [21]; in Figure 2 the data connection is shown as a solid arrow and the signalling connection is shown as a dashed arrow. Using these connections, the graphical generator [21] is able to pass display data to the output engine [22] along with a signal indicating if it is ordinary display data or Hidden Data.

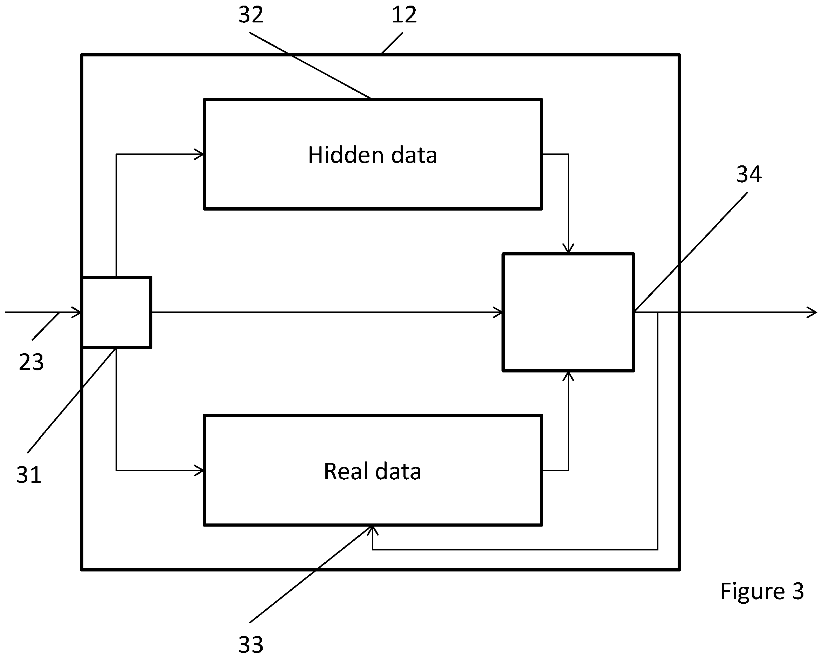

Figure 3 shows a detail of the display control device [12] showing the relevant internal components. There are likely to be other components, but these are not relevant to the invention and are not shown here.

The display control device [12] includes two display buffers [32, 33], of which one [33] is used for actual display data for immediate display and the other is used for Hidden Data [32] when it is transmitted by the host [11] and while it is not being used. This may include data that was previously used and is not currently being used but may be wanted again. There is also a processor [34], which performs composition as necessary prior to transmitting the final data to the display device [13] according to the configuration of the individual device. The processor [34] is connected to both buffers [32, 33] and is able to fetch data from them and also store composited data in the actual display data buffer [33], which may therefore act as a frame buffer. There is also an input engine [31] which is connected to the two buffers [32, 33] and the processor [34]. It is able to receive instructions and data from the host [11] via the connection [23] and determine what they are, for example by reading packet headers. It then directs data to the appropriate buffers [32, 33] and instructions on to the processor [34].

Figure 4 is a flowchart of the process as a whole with reference to Figures 1, 2, and 3. First, at Step S41, image elements [15, 16, 17, 18] are generated, most likely in the GPU [21] of the host [11]. A window or other similar display data is generated in full for each application running on the host [11], although they may not all be seen, depending on the final image [14] to be viewed by the user, as shown in Figure 1(b) in which part [19] of a window [16] is obscured. 'Applications' in this case includes the operating system, which is likely to be responsible for elements such as a desktop background [18]. As long as there are any application windows [15, 16, 17] visible, there will be an overlap between image elements, as such an application window will obscure the background [18].

The final arrangement is determined during composition, which occurs at Step S42. At this stage, the host [11] forms the finished frame [14] in which only the parts of application windows [15, 16, 17] and background [18] which will be seen by the user are present. However, it retains the parts of the image elements [15, 16, 17, 18] which are obscured: the Hidden Data. This includes the hatched part [19] of Application Window 16. Hidden Data may include windows which are 'minimised' - i.e., present but not visible in any way, even obscured by other windows - and parts of the background [18] which are obscured.

At Step S43, the composited frame [14] is transmitted to the display control device [12], as shown in Figure 2a. The Hidden Data [19] continues to be retained by the host [11].

Throughout the process, the GPU [21] or whichever other module on the host [11] is generating the display data continues to do so. This amended information may be used to amend the Hidden Data [19] or transmitted directly to the display control device [12] for immediate display, as appropriate. The latter case is likely to lead to immediate transmission of the data, which will occupy available bandwidth, while amended Hidden Data [19] will be sent when convenient as described below.

Once data has been transmitted to the display control device [12] at Step S43, the display control device [12] places it in a local frame buffer [33] and uses it to update the image shown on the display device [13] at Step S44. Meanwhile, in this example the host [11] monitors the bandwidth available in the connection [23] at Step S44A. This function may also or instead be performed by the display control device [12] or by another device which sends updates on the available bandwidth to the host [11]. If there is currently free bandwidth, for example the visible data is not changing at a high rate, as is likely in a desktop environment, the host [11] will continue following the path shown by the dotted boxes and will transmit the Hidden Data [19] to the display control device [12] at Step S44B.

This can most conveniently be done using packets with header data that indicates that the data is Hidden Data, as well as the application with which it is associated and its position on the canvas created by the application (i.e. the application window [15, 16, 17] or background [18]). This means that upon receipt it is placed in a dedicated buffer [32] on the display control device [12] so that it does not interfere with the visible display data but can still be used.

If it is not possible to send all the Hidden Data [19] which has been retained by the host [11], it may be prioritised according to heuristics. For example, the image elements may be ordered according to how rapidly they are changing such that the image element that is changing to the least degree has its associated Hidden Data transmitted first.

In any case, after the initial frame [14] is displayed at Step S44, the process moves to Step S45, which is shown in Figure 4(b). At this step, the host [11] detects a change in the desired image. For example, there may be some input from the user such as a mouse movement or an application's output may change. In any case, this change results in part of an image element [15, 16, 17, 18] that was previously hidden becoming visible, among other possible changes. The host [11] will transmit instructions regarding the change to the display control device [12], as well as data that has been added, such as by user input. For example, if the original image is that shown in Figure 1(b), the host might instruct the display control device [12] that Window 15 is to move to the right. This means that some of the area previously hidden [19] will become visible while some of the background [18] is hidden.

At Step S46, the processor [34] on the display control device [12] checks the Hidden Data buffer [32] to see if it has data for the area that will now be revealed. If so, the process moves directly to step S410 and the frame is recomposited with the newly-revealed Hidden Data in its correct place. This data is moved to the frame buffer [33], overwriting the data that was being displayed in that location previously. In the example where Application Window 15 has been moved to the right, the part of the background [18] which has now been obscured may be moved to the Hidden Data buffer [32] so that it can be used if, at some subsequent point, Application Window 15 is moved back to the left.

If the display control device [12] did not have the required data available, the process moves to Step S47 and the processor [34] sends a signal to the host [11] requesting the required data to be transmitted immediately.

At Step S48, the host [11] receives this signal and once again checks the available bandwidth in the connection, together with the amount of data required, the level of change to the visible data due, for example, to user input, and its other capabilities. This allows it to determine whether it would be most advantageous to send the required Hidden Data or to send a fully-composited frame or part of a frame. For example, if the change has been considerable and a large amount of data is required, it might be best for the GPU [21] on the host [11] to composite a frame locally and send it for immediate display rather than sending a large number of smaller pieces of Hidden Data which must still be composited upon their receipt by the display control device [12]. Another example of a circumstance in which it would be more efficient to composite the frame on the host would be if there was a significant amount of new data. For example, if one application window had moved and the contents of the other two had changed, for example to reflect new input from a sensor or because they are showing moving images, the host would need to send appropriate hidden data due to the movement of the first application window and also new data for the contents of the other two windows. It would be more efficient to composite a complete new frame locally rather than transmit a significant amount of data and then wait for it to be composited.

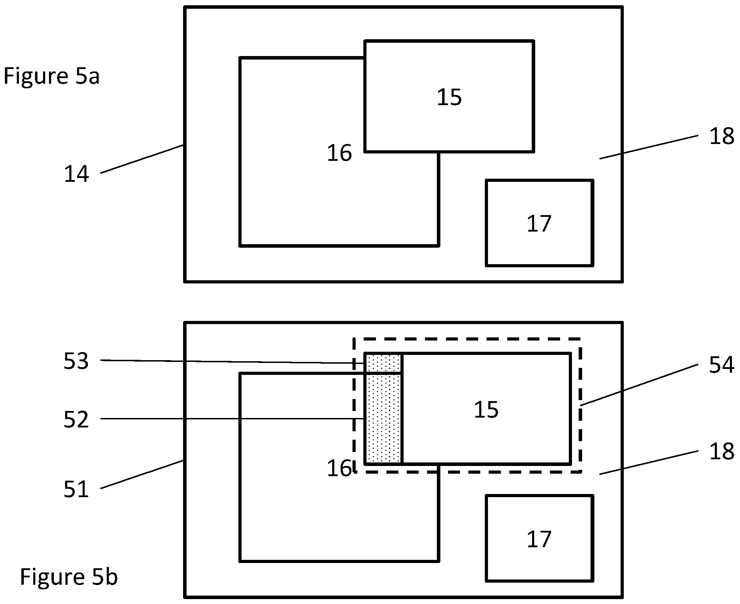

In either of these cases the process will return to Step S42 with an optional variation: if in fact the majority of the first frame sent has not changed, the host [11] may only composite and transmit a portion of a frame, showing only the area that has changed, as shown in Figure 5.

Figure 5a shows a first frame [14] such as that shown in Figure 1b, with three application windows [15, 16, 17] overlapping with one another and a background [18]. Figure 5b shows a second frame [51] showing the same three application windows [15, 16, 17] and background [18], but in the second frame [51] application window 15 has been moved to the right as previously suggested.

This will result in an area of Hidden Data comprising part [52] of application window 16 and part [53] of the background [18] being revealed. If the host [11] determines that there is insufficient available bandwidth to transmit any required Hidden Data, and/or that remote compositing would be inefficient due, for example, to limited processing power on the display control device [12] which could lead to unacceptable delay in preparation of the second frame [51], it may composite the second frame [51] locally and transmit it in full to the display control device [12], overwriting the whole contents of the main frame buffer [33].

Alternatively, it may composite and transmit only the area which has changed [54], thereby only overwriting that section of the frame buffer [33]. This will be advantageous if it is possible to perform partial updates of the frame buffer, for example where the frame [14, 51] is divided into tiles, any of which can be amended or replaced without interference with surrounding tiles.

If there is spare bandwidth and other capabilities, however, the host [11] will transmit the required Hidden Data at Step S49. This means that it is available for the display control device [12] to composite the new frame locally, which it does at Step S410 as previously described.

As an alternative to Steps S46 and S47, the host [11] may be aware of the data that it has transmitted to the display control device [12], having logged it as it was transmitted, perhaps by application and location. It will therefore be aware of whether or not the required Hidden Data is available and there will be no need for the display control device [12] to request Hidden Data; the host can send it along with the instructions to use it in composition. It will therefore make the decision as to bandwidth availability at Step S48 prior to sending instructions to reflect a change in the display data and required data. Of course, if all the required Hidden Data has been transmitted to the display control device [12] already, no more need be sent unless it has changed. This will save time as it means that there will not be a delay while the processor [34] attempts to composite a new frame and requests missing data; as a result, the likelihood of there being sufficient free bandwidth and sufficient time is higher. After this determination has been made, the process will proceed to Step S49 or return to Step S42 as previously described

In any case, the finished frame is displayed on the display device [13] as previously described at Step S44 and the process repeats from there.

Although only a few particular embodiments have been described in detail above, it will be appreciated that various changes, modifications and improvements can be made by a person skilled in the art without departing from the scope of the present invention as defined in the claims. For example, hardware aspects may be implemented as software where appropriate and vice versa.

## Claims

1. A method of transmitting display data from a host device to a display control device over a limited bandwidth connection, wherein the display data to be displayed by the display control device on a display device forms an image comprising two or more overlapping image elements, the method comprising:
compositing (S42), by the host device, a first image formed of at least the two overlapping image elements;
transmitting (S43), by the host device, the first image over the limited bandwidth connection to the display control device for display on a display device;
determining, by the host device, hidden display data of one or more portions of one or more overlapped image elements whose display data was not in the composited first image;
determining (S44A), by the host device, when the limited bandwidth connection has sufficient available bandwidth capacity for at least some of the hidden display data to be transmitted to the display control device;
in response to determining that the limited bandwidth connection has sufficient available bandwidth capacity for at least some of the hidden display data to be transmitted to the display control device, transmitting (S44B), by the host device, at least some of the hidden display data to the display control device;
determining, by the host device, when a second image to be displayed includes at least some of the hidden display data; and
transmitting information, by the host device, to the display control device instructing the display control device to use the transmitted hidden display data to composite the second image using the transmitted hidden display data.

2. A method according to claim 1, wherein the two or more overlapping image elements are generated by two or more different applications.

3. A method according to either claim 1 or claim 2, further comprising:
determining, by the host device whether all the hidden display data required for the second or a further image is available to the display control device; and
if it is determined that not all the required hidden display data is available, determining, by the host device, whether to send the required hidden display data to the display control device and instruct the display control device to composite the second or the further image, or whether to composite a new first image at the host device and to transmit at least a changed part of the new first image to the display control device.

4. A method according to claim 3, wherein determining, by the host device, whether to send the required hidden display data to the display control device and instruct the display control device to composite the second or the further image, or whether to composite a new first image at the host device and to transmit at least a changed part of the new first image to the display control device, comprises:
determining, by the host device, whether the limited bandwidth connection has sufficient available bandwidth capacity for the required hidden display data to be transmitted to the display control device; and
in response to determining that the limited bandwidth connection has sufficient available bandwidth capacity for the required hidden display data to be transmitted to the display control device, transmitting, by the host device, the required hidden display data to the display control device.

5. A method according to claim 3, wherein determining, by the host device, whether to send the required hidden display data to the display control device and instruct the display control device to composite the second or the further image, or whether to composite a new first image at the host device and to transmit at least a changed part of the new first image to the display control device, comprises:
determining, by the host device, whether the display control device compositing the second or the further image would be more or less efficient than the host device compositing a new first image and transmitting at least a changed part of the new first image to the display control device; and
in response to determining that the display control device compositing the second or the further image would be more efficient than the host device compositing a new first image and transmitting at least a changed part of the new first image to the display control device, transmitting, by the host device, the required hidden display data to the display control device.

6. A method according to claim 5, further comprising:
in response to determining that the display control device compositing the second or the further image would be less efficient than the host device compositing a new first image and transmitting at least a changed part of the new first image to the display control device, compositing, by the host device, a new first image;
transmitting, by the host device, at least a changed part of the new first image over the limited bandwidth connection to the display control device; and
repeating the remaining steps of any one of the preceding claims for the new first image and a new second image.

7. A method according to claim 6, wherein the at least a changed part of the new first image comprises one or more updated tiles forming part of the new first image.

8. A method according to any preceding claim, further comprising:
storing, by the display control device, the transmitted hidden display data in storage available to the display control device; and
compositing, by the display control device, the second image using the stored hidden display data based on the information transmitted by the host device.

9. A method according to claim 8, further comprising:
determining, by the display control device, display data from the first image that was displaced by the stored hidden display data during the compositing by the display control device; and
storing, by the display control device, the displaced display data as hidden display data.

10. A method according to claim 9, further comprising:
compositing, by the display control device a further image using the stored hidden display data.

11. A method according to any one of claims 8 to 10, further comprising:
determining, by the display control device whether all the hidden display data required for the second or the further image is available to the display control device; and
if it is determined that not all the required hidden display data is available, transmitting, by the display control device, a request to the host device for the required hidden display data that is not available.

12. A method according to claim 11, further comprising:
receiving, by the host device, the request for the required hidden display data that is not available to the display control device;
determining, by the host device, whether to send the requested required hidden display data to the display control device and instruct the display control device to composite the second or the further image, or whether to composite a new first image at the host device and to transmit at least a changed part of the new first image to the display control device.

13. A method according to claim 12, wherein determining, by the host device, whether to send the required hidden display data to the display control device and instruct the display control device to composite the second or the further image, or whether to composite a new first image at the host device and to transmit at least a changed part of the new first image to the display control device, comprises:
determining, by the host device, whether the limited bandwidth connection has sufficient available bandwidth capacity for the required hidden display data to be transmitted to the display control device; and
in response to determining that the limited bandwidth connection has sufficient available bandwidth capacity for the required hidden display data to be transmitted to the display control device, transmitting, by the host device, the required hidden display data to the display control device.

14. A method according to claim 12, wherein determining, by the host device, whether to send the required hidden display data to the display control device and instruct the display control device to composite the second or the further image, or whether to composite a new first image at the host device and to transmit at least a changed part of the new first image to the display control device, comprises:
determining, by the host device, whether the display control device compositing the second or the further image would be more or less efficient than the host device compositing a new first image and transmitting at least a changed part of the new first image to the display control device; and
in response to determining that the display control device compositing the second or the further image would be more efficient than the host device compositing a new first image and transmitting at least a changed part of the new first image to the display control device, transmitting, by the host device, the required hidden display data to the display control device.

15. A method according to claim 14, further comprising:
in response to determining that the display control device compositing the second or the further image would be less efficient than the host device compositing a new first image and transmitting at least a changed part of the new first image to the display control device, compositing, by the host device, a new first image;
transmitting, by the host device, at least a changed part of the new first image over the limited bandwidth connection to the display control device; and
repeating the remaining steps of any one of the preceding claims for the new first image and a new second image.

16. A method according to any preceding claim, further comprising monitoring available bandwidth capacity of the limited bandwidth connection.

17. A method according to claim 16, wherein the monitoring is performed by the host device or the display control device or by another device connected to the limited bandwidth connection.

18. A host device for transmitting display data to a display control device over a limited bandwidth connection, the host device configured to perform all the steps of a method according to any one of claims 1 to 7.

19. A system comprising a host device according to claim 18, a display control device connected to the host device by a limited bandwidth connection and a display device connected to the display control device for displaying the image.

20. A system according to claim 19, configured to perform all the steps of a method according to any one of claims 8 to 17.

## Patentansprüche

1. Verfahren zum Übertragen von Anzeigedaten von einer Host-Vorrichtung an eine Anzeigesteuerungsvorrichtung über eine Verbindung mit begrenzter Bandbreite, wobei die durch die Anzeigesteuerungsvorrichtung auf einer Anzeigevorrichtung anzuzeigenden Anzeigedaten ein Bild bilden, das zwei überlappende Bildelemente beinhaltet, wobei das Verfahren Folgendes beinhaltet:
Zusammensetzen (S42), durch die Host-Vorrichtung, eines ersten Bildes, das mindestens aus den zwei überlappenden Bildelementen gebildet ist;
Übertragen (S43), durch die Host-Vorrichtung, des ersten Bildes über die Verbindung mit begrenzter Bandbreite an die Anzeigesteuerungsvorrichtung zur Anzeige auf einer Anzeigevorrichtung;
Bestimmen, durch die Host-Vorrichtung, von versteckten Anzeigedaten von einem oder mehreren Teilen von einem oder mehreren überlappenden Bildelementen, deren Anzeigedaten nicht in dem zusammengesetzten ersten Bild waren;
Bestimmen (S44A), durch die Host-Vorrichtung, wann die Verbindung mit begrenzter Bandbreite genügend verfügbare Bandbreitenkapazität für mindestens einige der versteckten Anzeigedaten aufweist, die an die Anzeigesteuerungsvorrichtung zu übertragen sind;
als Reaktion auf das Bestimmen, dass die Verbindung mit begrenzter Bandbreite genügend verfügbare Bandbreitenkapazität für mindestens einige der versteckten Anzeigedaten aufweist, die an die Anzeigesteuerungsvorrichtung zu übertragen sind, Übertragen (S44B), durch die Host-Vorrichtung, mindestens einiger der versteckten Anzeigedaten an die Anzeigesteuerungsvorrichtung;
Bestimmen, durch die Host-Vorrichtung, wann ein zweites anzuzeigendes Bild mindestens einige der versteckten Anzeigedaten aufweist; und
Übertragen von Informationen, durch die Host-Vorrichtung, an die Anzeigesteuerungsvorrichtung, die die Anzeigesteuerungsvorrichtung anweisen, die übertragenen versteckten Anzeigedaten zu verwenden, um das zweite Bild unter Verwendung der übertragenen versteckten Anzeigedaten zusammenzusetzen.

2. Verfahren gemäß Anspruch 1, wobei die zwei oder die mehreren überlappenden Bildelemente durch zwei oder mehrere unterschiedliche Anwendungen erzeugt werden.

3. Verfahren gemäß Anspruch 1 oder Anspruch 2, das ferner Folgendes beinhaltet:
Bestimmen, durch die Host-Vorrichtung, ob alle versteckten Anzeigedaten, die für das zweite oder ein weiteres Bild erforderlich sind, für die Anzeigesteuerungsvorrichtung verfügbar sind; und
falls bestimmt wird, dass nicht alle erforderlichen versteckten Anzeigedaten verfügbar sind, Bestimmen, durch die Host-Vorrichtung, ob die erforderlichen versteckten Anzeigedaten an die Anzeigesteuerungsvorrichtung gesendet werden sollen und die Anzeigesteuerungsvorrichtung angewiesen werden soll, das zweite oder das weitere Bild zusammenzusetzen, oder ob ein neues erstes Bild an der Host-Vorrichtung zusammengesetzt werden soll und mindestens ein geänderter Teil des neuen ersten Bildes an die Anzeigesteuerungsvorrichtung übertragen werden soll.

4. Verfahren gemäß Anspruch 3, wobei das Bestimmen, durch die Host-Vorrichtung, ob die erforderlichen versteckten Anzeigedaten an die Anzeigesteuerungsvorrichtung gesendet werden sollen und die Anzeigesteuerungsvorrichtung angewiesen werden soll, das zweite oder das weitere Bild zusammenzusetzen, oder ob ein neues erstes Bild an der Host-Vorrichtung zusammengesetzt werden soll und mindestens ein geänderter Teil des neuen ersten Bildes an die Anzeigesteuerungsvorrichtung übertragen werden soll, Folgendes beinhaltet:
Bestimmen, durch die Host-Vorrichtung, ob die Verbindung mit begrenzter Bandbreite genügend verfügbare Bandbreitenkapazität für die erforderlichen versteckten Anzeigedaten aufweist, die an die Anzeigesteuerungsvorrichtung zu übertragen sind; und
als Reaktion auf das Bestimmen, dass die Verbindung mit begrenzter Bandbreite genügend verfügbare Bandbreitenkapazität für die erforderlichen versteckten Anzeigedaten aufweist, die an die Anzeigesteuerungsvorrichtung zu übertragen sind, Übertragen, durch die Host-Vorrichtung, der erforderlichen versteckten Anzeigedaten an die Anzeigesteuerungsvorrichtung.

5. Verfahren gemäß Anspruch 3, wobei das Bestimmen, durch die Host-Vorrichtung, ob die erforderlichen versteckten Anzeigedaten an die Anzeigesteuerungsvorrichtung gesendet werden sollen und die Anzeigesteuerungsvorrichtung angewiesen werden soll, das zweite oder das weitere Bild zusammenzusetzen, oder ob ein neues erstes Bild an der Host-Vorrichtung zusammengesetzt werden soll und mindestens ein geänderter Teil des neuen ersten Bildes an die Anzeigesteuerungsvorrichtung übertragen werden soll, Folgendes beinhaltet:
Bestimmen, durch die Host-Vorrichtung, ob die Anzeigesteuerungsvorrichtung, die das zweite oder das weitere Bild zusammensetzt, effizienter oder weniger effizient sein wird als die Host-Vorrichtung, die ein neues erstes Bild zusammensetzt, und Übertragen mindestens eines geänderten Teils des neuen ersten Bildes an die Anzeigesteuerungsvorrichtung; und
als Reaktion auf das Bestimmen, dass die Anzeigesteuerungsvorrichtung, die das zweite oder das weitere Bild zusammensetzt, effizienter sein wird als die Host-Vorrichtung, die ein neues erstes Bild zusammensetzt, und Übertragen mindestens eines geänderten Teils des neuen ersten Bildes an die Anzeigesteuerungsvorrichtung, Übertragen, durch die Host-Vorrichtung, der erforderlichen versteckten Anzeigedaten an die Anzeigesteuerungsvorrichtung.

6. Verfahren gemäß Anspruch 5, das ferner Folgendes beinhaltet:
als Reaktion auf das Bestimmen, dass die Anzeigesteuerungsvorrichtung, die das zweite oder das weitere Bild zusammensetzt, weniger effizient sein wird als die Host-Vorrichtung, die ein neues erstes Bild zusammensetzt, und Übertragen mindestens eines geänderten Teils des neuen ersten Bildes an die Anzeigesteuerungsvorrichtung, Zusammensetzen, durch die Host-Vorrichtung, eines neuen ersten Bildes;
Übertragen, durch die Host-Vorrichtung, mindestens eines geänderten Teils des neuen ersten Bildes über die Verbindung mit begrenzter Bandbreite an die Anzeigesteuerungsvorrichtung; und
Wiederholen der restlichen Schritte gemäß einem der vorhergehenden Ansprüche für das neue erste Bild ein neues zweites Bild.

7. Verfahren gemäß Anspruch 6, wobei der mindestens geänderte Teil des neuen ersten Bildes eine oder mehrere Kacheln beinhaltet, die einen Teil des neuen ersten Bildes bilden.

8. Verfahren gemäß einem vorhergehenden Anspruch, das ferner Folgendes beinhaltet:
Speichern, durch die Anzeigesteuerungsvorrichtung, der übertragenen versteckten Anzeigedaten in einem Speicher, der für die Anzeigesteuerungsvorrichtung verfügbar ist; und
Zusammensetzen, durch die Anzeigesteuerungsvorrichtung, des zweiten Bildes unter Verwendung der gespeicherten versteckten Anzeigedaten basierend auf den Informationen, die durch die Host-Vorrichtung übertragen werden.

9. Verfahren gemäß Anspruch 8, das ferner Folgendes beinhaltet:
Bestimmen, durch die Anzeigesteuerungsvorrichtung, von Anzeigedaten aus dem ersten Bild, die von den gespeicherten versteckten Anzeigedaten während des Zusammensetzens durch die Anzeigesteuerungsvorrichtung ersetzt werden; und
Speichern, durch die Anzeigesteuerungsvorrichtung, der ersetzten Anzeigedaten als versteckte Anzeigedaten.

10. Verfahren gemäß Anspruch 9, das ferner Folgendes beinhaltet:
Zusammensetzen, durch die Anzeigesteuerungsvorrichtung, eines weiteren Bildes unter Verwendung der gespeicherten versteckten Anzeigedaten.

11. Verfahren gemäß einem der Ansprüche 8 bis 10, das ferner Folgendes beinhaltet:
Bestimmen, durch die Anzeigesteuerungsvorrichtung, ob alle versteckten Anzeigedaten, die für das zweite oder das weiteres Bild erforderlich sind, für die Anzeigesteuerungsvorrichtung verfügbar sind; und
falls bestimmt wird, dass nicht alle erforderlichen versteckten Anzeigedaten verfügbar sind, Übertragen, durch die Anzeigesteuerungsvorrichtung, einer Anforderung an die Host-Vorrichtung für die erforderlichen versteckten Anzeigedaten, die nicht verfügbar sind.

12. Verfahren gemäß Anspruch 11, das ferner Folgendes beinhaltet:
Empfangen, durch die Host-Vorrichtung, der Anforderung für die erforderlichen versteckten Anzeigedaten, die für die Anzeigesteuerungsvorrichtung nicht verfügbar sind;
Bestimmen, durch die Host-Vorrichtung, ob die angeforderten erforderlichen versteckten Anzeigedaten an die Anzeigesteuerungsvorrichtung gesendet werden sollen und die Anzeigesteuerungsvorrichtung angewiesen werden soll, das zweite oder das weitere Bild zusammenzusetzen, oder ob ein neues erstes Bild an der Host-Vorrichtung zusammengesetzt werden soll und mindestens ein geänderter Teil des neuen ersten Bildes an die Anzeigesteuerungsvorrichtung übertragen werden soll.

13. Verfahren gemäß Anspruch 12, wobei das Bestimmen, durch die Host-Vorrichtung, ob die erforderlichen versteckten Anzeigedaten an die Anzeigesteuerungsvorrichtung gesendet werden sollen und die Anzeigesteuerungsvorrichtung angewiesen werden soll, das zweite oder das weitere Bild zusammenzusetzen, oder ob ein neues erstes Bild an der Host-Vorrichtung zusammengesetzt werden soll und mindestens ein geänderter Teil des neuen ersten Bildes an die Anzeigesteuerungsvorrichtung übertragen werden soll, Folgendes beinhaltet:
Bestimmen, durch die Host-Vorrichtung, ob die Verbindung mit begrenzter Bandbreite genügend verfügbare Bandbreitenkapazität für die erforderlichen versteckten Anzeigedaten aufweist, die an die Anzeigesteuerungsvorrichtung zu übertragen sind; und
als Reaktion auf das Bestimmen, dass die Verbindung mit begrenzter Bandbreite genügend verfügbare Bandbreitenkapazität für die erforderlichen versteckten Anzeigedaten aufweist, die an die Anzeigesteuerungsvorrichtung zu übertragen sind, Übertragen, durch die Host-Vorrichtung, der erforderlichen versteckten Anzeigedaten an die Anzeigesteuerungsvorrichtung.

14. Verfahren gemäß Anspruch 12, wobei das Bestimmen, durch die Host-Vorrichtung, ob die erforderlichen versteckten Anzeigedaten an die Anzeigesteuerungsvorrichtung gesendet werden sollen und die Anzeigesteuerungsvorrichtung angewiesen werden soll, das zweite oder das weitere Bild zusammenzusetzen, oder ob ein neues erstes Bild an der Host-Vorrichtung zusammengesetzt werden soll und mindestens ein geänderter Teil des neuen ersten Bildes an die Anzeigesteuerungsvorrichtung übertragen werden soll, Folgendes beinhaltet:
Bestimmen, durch die Host-Vorrichtung, ob die Anzeigesteuerungsvorrichtung, die das zweite oder das weitere Bild zusammensetzt, effizienter oder weniger effizient sein wird als die Host-Vorrichtung, die ein neues erstes Bild zusammensetzt, und Übertragen mindestens eines geänderten Teils des neuen ersten Bildes an die Anzeigesteuerungsvorrichtung; und
als Reaktion auf das Bestimmen, dass die Anzeigesteuerungsvorrichtung, die das zweite oder das weitere Bild zusammensetzt, effizienter sein wird als die Host-Vorrichtung, die ein neues erstes Bild zusammensetzt, und Übertragen mindestens eines geänderten Teils des neuen ersten Bildes an die Anzeigesteuerungsvorrichtung, Übertragen, durch die Host-Vorrichtung, der erforderlichen versteckten Anzeigedaten an die Anzeigesteuerungsvorrichtung.

15. Verfahren gemäß Anspruch 14, das ferner Folgendes beinhaltet:
als Reaktion auf das Bestimmen, dass die Anzeigesteuerungsvorrichtung, die das zweite oder das weitere Bild zusammensetzt, weniger effizient sein wird als die Host-Vorrichtung, die ein neues erstes Bild zusammensetzt, und Übertragen mindestens eines geänderten Teils des neuen ersten Bildes an die Anzeigesteuerungsvorrichtung, Zusammensetzen, durch die Host-Vorrichtung, eines neuen ersten Bildes;
Übertragen, durch die Host-Vorrichtung, mindestens eines geänderten Teils des neuen ersten Bildes über die Verbindung mit begrenzter Bandbreite an die Anzeigesteuerungsvorrichtung; und
Wiederholen der restlichen Schritte gemäß einem der vorhergehenden Ansprüche für das neue erste Bild ein neues zweites Bild.

16. Verfahren gemäß einem vorhergehenden Anspruch, das ferner das Überwachen verfügbarer Bandbreitenkapazität der Verbindung mit begrenzter Bandbreite beinhaltet.

17. Verfahren gemäß Anspruch 16, wobei das Überwachen durch die Host-Vorrichtung oder die Anzeigesteuerungsvorrichtung oder durch eine andere Vorrichtung, die mit der Verbindung mit begrenzter Bandbreite verbunden ist, durchgeführt wird.

18. Host-Vorrichtung zum Übertragen von Anzeigedaten an eine Anzeigesteuerungsvorrichtung über eine Verbindung mit begrenzter Bandbreite, wobei die Host-Vorrichtung konfiguriert ist, um alle Schritte eines Verfahrens gemäß einem der Ansprüche 1 bis 7 durchzuführen.

19. System, das eine Host-Vorrichtung gemäß Anspruch 18, eine Anzeigesteuerungsvorrichtung, die mit der Host-Vorrichtung mittels einer Verbindung mit begrenzter Bandbreite verbunden ist, und eine Anzeigevorrichtung, die mit der Anzeigesteuerungsvorrichtung zum Anzeigen des Bildes verbunden ist, beinhaltet.

20. System gemäß Anspruch 19, das konfiguriert ist, um alle Schritte eines Verfahrens gemäß einem der Ansprüche 8 bis 17 durchzuführen.

## Revendications

1. Procédé de transmission de données d'affichage d'un dispositif hôte à un dispositif de commande d'affichage sur une connexion à largeur de bande limitée, dans lequel les données d'affichage destinées à être affichées par le dispositif de commande d'affichage sur un dispositif d'affichage forment une image comprenant deux ou plusieurs éléments d'image chevauchants, le procédé comprenant :
la composition (S42), par le dispositif hôte, d'une première image formée d'au moins les deux éléments d'image chevauchants ;
la transmission (S43), par le dispositif hôte, de la première image sur la connexion à largeur de bande limitée au dispositif de commande d'affichage en vue de son affichage sur un dispositif d'affichage ;
la détermination, par le dispositif hôte, de données d'affichage cachées d'une ou de plusieurs parties d'un ou de plusieurs éléments d'image chevauchés dont les données d'affichage ne se trouvaient pas dans la première image composée ;
la détermination (S44A), par le dispositif hôte, du moment où la connexion à largeur de bande limitée possède une capacité de largeur de bande disponible suffisante pour au moins certaines des données d'affichage cachées destinées à être transmises au dispositif de commande d'affichage ;
en réponse à la détermination que la connexion à largeur de bande limitée possède une capacité de largeur de bande disponible suffisante pour au moins certaines des données d'affichage cachées destinées à être transmises au dispositif de commande d'affichage, la transmission (S44B), par le dispositif hôte, d'au moins certaines des données d'affichage cachées au dispositif de commande d'affichage ;
la détermination, par le dispositif hôte, du moment où une deuxième image à afficher comporte au moins certaines des données d'affichage cachées ; et
la transmission d'informations, par le dispositif hôte, au dispositif de commande d'affichage ordonnant au dispositif de commande d'affichage d'utiliser les données d'affichage cachées transmises pour composer la deuxième image à l'aide des données d'affichage cachées transmises.

2. Procédé selon la revendication 1, dans lequel les deux ou plusieurs éléments d'image chevauchants sont générés par deux ou plusieurs applications différentes.

3. Procédé selon la revendication 1 ou la revendication 2, comprenant en outre :
la détermination, par le dispositif hôte que le dispositif de commande d'affichage dispose ou non de toutes les données d'affichage cachées requises pour la deuxième image ou une image supplémentaire ; et
s'il est déterminé que les données d'affichage cachées requises ne sont pas toutes disponibles, la détermination, par le dispositif hôte, qu'il convient d'envoyer les données d'affichage cachées requises au dispositif de commande d'affichage et d'ordonner au dispositif de commande d'affichage de composer la deuxième image ou l'image supplémentaire, ou qu'il convient de composer une nouvelle première image au niveau du dispositif hôte et de transmettre au moins une partie modifiée de la nouvelle première image au dispositif de commande d'affichage.

4. Procédé selon la revendication 3, dans lequel la détermination, par le dispositif hôte, qu'il convient d'envoyer les données d'affichage cachées requises au dispositif de commande d'affichage et d'ordonner au dispositif de commande d'affichage de composer la deuxième image ou l'image supplémentaire, ou qu'il convient de composer une nouvelle première image au niveau du dispositif hôte et de transmettre au moins une partie modifiée de la nouvelle première image au dispositif de commande d'affichage, comprend :
la détermination, par le dispositif hôte, que la connexion à largeur de bande limitée possède ou non une capacité de largeur de bande disponible suffisante pour les données d'affichage cachées requises destinées à être transmises au dispositif de commande d'affichage ; et
en réponse à la détermination que la connexion à largeur de bande limitée possède une capacité de largeur de bande disponible suffisante pour les données d'affichage cachées requises destinées à être transmises au dispositif de commande d'affichage, la transmission, par le dispositif hôte, des données d'affichage cachées requises au dispositif de commande d'affichage.

5. Procédé selon la revendication 3, dans lequel la détermination, par le dispositif hôte, qu'il convient d'envoyer les données d'affichage cachées requises au dispositif de commande d'affichage et d'ordonner au dispositif de commande d'affichage de composer la deuxième image ou l'image supplémentaire, ou qu'il convient de composer une nouvelle première image au niveau du dispositif hôte et de transmettre au moins une partie modifiée de la nouvelle première image au dispositif de commande d'affichage, comprend :
la détermination, par le dispositif hôte, que la composition par le dispositif de commande d'affichage de la deuxième image ou de l'image supplémentaire serait plus ou moins efficace que la composition par le dispositif hôte d'un nouvelle première image et la transmission d'au moins une partie modifiée de la nouvelle première image au dispositif de commande d'affichage ; et
en réponse à la détermination que la composition par le dispositif de commande d'affichage de la deuxième image ou de l'image supplémentaire serait plus efficace que la composition par le dispositif hôte d'un nouvelle première image et la transmission d'au moins une partie modifiée de la nouvelle première image au dispositif de commande d'affichage, la transmission, par le dispositif hôte, des données d'affichage cachées requises au dispositif de commande d'affichage.

6. Procédé selon la revendication 5, comprenant en outre :
en réponse à la détermination que la composition par le dispositif de commande d'affichage de la deuxième image ou de l'image supplémentaire serait moins efficace que la composition par le dispositif hôte d'un nouvelle première image et la transmission d'au moins une partie modifiée de la nouvelle première image au dispositif de commande d'affichage, la composition, par le dispositif hôte, d'une nouvelle première image ;
la transmission, par le dispositif hôte, d'au moins une partie modifiée de la nouvelle première image sur la connexion à largeur de bande limitée au dispositif de commande d'affichage ; et
la répétition des étapes restantes de l'une quelconque des revendications précédentes pour la nouvelle première image et une nouvelle deuxième image.

7. Procédé selon la revendication 6, dans lequel l'au moins une partie modifiée de la nouvelle première image comprend une ou plusieurs dalles actualisées faisant partie de la nouvelle première image.

8. Procédé selon n'importe quelle revendication précédente, comprenant en outre :
la mémorisation, par le dispositif de commande d'affichage, des données d'affichage cachées transmises dans une mémoire à la disposition du dispositif de commande d'affichage ; et
la composition, par le dispositif de commande d'affichage, de la deuxième image en utilisant les données d'affichage cachées mémorisées en fonction des informations transmises par le dispositif hôte.

9. Procédé selon la revendication 8, comprenant en outre :
la détermination, par le dispositif de commande d'affichage, de données d'affichage de la première image qui ont été déplacées par les données d'affichage cachées mémorisées durant la composition par le dispositif de commande d'affichage ; et
la mémorisation, par le dispositif de commande d'affichage, des données d'affichage déplacées en tant que données d'affichage cachées.

10. Procédé selon la revendication 9, comprenant en outre :
la composition, par le dispositif de commande d'affichage, d'une image supplémentaire à l'aide des données d'affichage cachées mémorisées.

11. Procédé selon l'une quelconque des revendications 8 à 10, comprenant en outre :
la détermination, par le dispositif de commande d'affichage que le dispositif de commande d'affichage dispose ou non de toutes les données d'affichage cachées requises pour la deuxième image ou l'image supplémentaire ; et
s'il est déterminé que les données d'affichage cachées requises ne sont pas toutes disponibles, la transmission, par le dispositif de commande d'affichage, d'une demande au dispositif hôte portant sur les données d'affichage cachées requises qui ne sont pas disponibles.

12. Procédé selon la revendication 11, comprenant en outre :
la réception, par le dispositif hôte, de la demande portant sur les données d'affichage cachées requises dont ne dispose pas le dispositif de commande d'affichage ;
la détermination, par le dispositif hôte, qu'il convient d'envoyer les données d'affichage cachées requises demandées au dispositif de commande d'affichage et d'ordonner au dispositif de commande d'affichage de composer la deuxième image ou l'image supplémentaire, ou qu'il convient de composer une nouvelle première image au niveau du dispositif hôte et de transmettre au moins une partie modifiée de la nouvelle première image au dispositif de commande d'affichage.

13. Procédé selon la revendication 12, dans lequel la détermination, par le dispositif hôte, qu'il convient d'envoyer les données d'affichage cachées requises demandées au dispositif de commande d'affichage et d'ordonner au dispositif de commande d'affichage de composer la deuxième image ou l'image supplémentaire, ou qu'il convient de composer une nouvelle première image au niveau du dispositif hôte et de transmettre au moins une partie modifiée de la nouvelle première image au dispositif de commande d'affichage, comprend :
la détermination, par le dispositif hôte, que la connexion à largeur de bande limitée possède ou non une capacité de largeur de bande disponible suffisante pour les données d'affichage cachées requises destinées à être transmises au dispositif de commande d'affichage ; et
en réponse à la détermination que la connexion à largeur de bande limitée possède une capacité de largeur de bande disponible suffisante pour les données d'affichage cachées requises destinées à être transmises au dispositif de commande d'affichage, la transmission, par le dispositif hôte, des données d'affichage cachées requises au dispositif de commande d'affichage.

14. Procédé selon la revendication 12, dans lequel la détermination, par le dispositif hôte, qu'il convient d'envoyer les données d'affichage cachées requises demandées au dispositif de commande d'affichage et d'ordonner au dispositif de commande d'affichage de composer la deuxième image ou l'image supplémentaire, ou qu'il convient de composer une nouvelle première image au niveau du dispositif hôte et de transmettre au moins une partie modifiée de la nouvelle première image au dispositif de commande d'affichage, comprend :
la détermination, par le dispositif hôte, que la composition par le dispositif de commande d'affichage de la deuxième image ou de l'image supplémentaire serait plus ou moins efficace que la composition par le dispositif hôte d'une nouvelle première image et la transmission d'au moins une partie modifiée de la nouvelle première image au dispositif de commande d'affichage ; et
en réponse à la détermination que la composition par le dispositif de commande d'affichage de la deuxième image ou de l'image supplémentaire serait plus efficace que la composition par le dispositif hôte d'une nouvelle première image et la transmission d'au moins une partie modifiée de la nouvelle première image au dispositif de commande d'affichage, la transmission, par le dispositif hôte, des données d'affichage cachées requises au dispositif de commande d'affichage.

15. Procédé selon la revendication 14, comprenant en outre :
en réponse à la détermination que la composition par le dispositif de commande d'affichage de la deuxième image ou de l'image supplémentaire serait moins efficace que la composition par le dispositif hôte d'une nouvelle première image et la transmission d'au moins une partie modifiée de la nouvelle première image au dispositif de commande d'affichage, la composition, par le dispositif hôte, d'une nouvelle première image ;
la transmission, par le dispositif hôte, d'au moins une partie modifiée de la nouvelle première image sur la connexion à largeur de bande limitée au dispositif de commande d'affichage ; et
la répétition des étapes restantes de l'une quelconque des revendications précédentes pour la nouvelle première image et une nouvelle deuxième image.

16. Procédé selon n'importe quelle revendication précédente, comprenant en outre la surveillance de la capacité de largeur de bande disponible de la connexion à largeur de bande limitée.

17. Procédé selon la revendication 16, dans lequel la surveillance est réalisée par le dispositif hôte ou le dispositif de commande d'affichage ou par un autre dispositif connecté à la connexion à largeur de bande limitée.

18. Dispositif hôte destiné à la transmission de données d'affichage à un dispositif de commande d'affichage sur une connexion à largeur de bande limitée, le dispositif hôte étant configuré pour réaliser toutes les étapes d'un procédé selon l'une quelconque des revendications 1 à 7.

19. Système comprenant un dispositif hôte selon la revendication 18, un dispositif de commande d'affichage connecté au dispositif hôte par une connexion à largeur de bande limitée et un dispositif d'affichage connecté au dispositif de commande d'affichage pour afficher l'image.

20. Système selon la revendication 19, configuré pour réaliser toute les étapes d'un procédé selon l'une quelconque des revendications 8 à 17.
